# EUROPÄISCHE PATENTANMELDUNG

(11) **EP 1 138 589 A2**
(43) Veröffentlichungstag der Anmeldung: **04.10.2001**
(21) Anmeldenummer: 01105533.2
(22) Anmeldetag: 06.03.2001
(51) Int. Cl.: B62K 13/02, B62K 27/12

(54) **Kopplungsvorrichtung für Fahrräder**

(30) Priorität: 29.03.2000 DE 20005839 U
(71) Anmelder: BAUER, ANTON, 63500 SELIGENSTADT (DE); WISSEL, PETER, 63500 SELIGENSTADT (DE)
(72) Erfinder: BAUER, ANTON, 63500 SELIGENSTADT (DE); WISSEL, PETER, 63500 SELIGENSTADT (DE)
(74) Vertreter: Katscher, Helmut, Dipl.-Ing.

(57) **Zusammenfassung**

Eine Kopplungsvorrichtung (1) für Fahrräder zum Verbinden eines schleppenden Fahrrads (4) mit einem geschleppten Kinderfahrrad (6), mit der das Vorderrad des zu schleppenden Kinderfahrrads (6) vom Boden abgehoben unbeweglich verbunden werden kann, ist seitlich im Bereich des Hinterrads an mindestens drei Stellen fest am schleppenden Fahrrad (4) anbringbar, wobei der Vorderradumfang des um die Vorderradachse (10) frei beweglichen Kinderfahrrads (6) an mindestens drei Stellen fest und unbeweglich mit der Kopplungsvorrichtung (1) verbindbar ist. Die Kopplungsvorrichtung (1) weist eine oben offene Blechwanne (7) auf, in welche das Vorderrad des zu schleppenden Kinderfahrrads (6) eingestellt und mit einer weiteren, den Radkranz umgreifenden Schnalle (8) gesichert werden kann. Durch Einlagen kann die oben offene Blechwanne (7) an verschiedene Raddurchmesser des zu schleppenden Kinderfahrrads (6) angepasst werden. Die Kopplungsvorrichtung (1) ist mittels eines das Hinterrad des schleppenden Fahrrads (4) umgreifenden Bügels (9) auf der der Kopplungsvorrichtung (1) gegenüberliegenden Seite am Rahmen oder an der Achse (3) des schleppenden Fahrrads (4) zusätzlich befestigbar.

## Beschreibung

Die Erfindung betrifft eine Kopplungsvorrichtung für Fahrräder zum Verbinden eines schleppenden Fahrrades mit einem geschleppten Kinderfahrrad, die an mindestens zwei Stellen am Rahmen des schleppenden Fahrrades fest anbringbar ist und mit der das Vorderrad des zu schleppenden Kinderfahrrades vom Boden abgehoben unbeweglich verbindbar ist.

Sobald kleine Kinder selbständig Radfahren erlernt haben, möchten Sie bei gemeinsam mit erwachsenen Begleitern unternommenen Fahrradtouren mit ihrem eigenen Fahrrad unterwegs sein. Dabei kann es immer vorkommen, dass auf Grund gefährlicher Verkehrssituationen oder einer als zu lange empfundenen Entfernung das Kind nicht mehr selbständig weiterfahren darf oder möchte. Tritt ein solcher Fall ein, so sind die Begleiter gezwungen, neben ihrem eigenen Fahrrad auch das Kind und dessen Fahrrad sicher weiterzubefördern. Während das Kind praktisch und sicher in einem dafür vorgesehenen Kindersitz mitgenommen werden kann, wird das nun führerlose Kinderfahrrad zu einem Problem.

Um zu vermeiden, dass nun beide Fahrräder vom erwachsenen Begleiter geschoben werden müssen, sind bereits verschiedene vorbekannte Anhängesysteme für Kinderfahrräder entwickelt worden. Eine starre oder um bestimmte Achsen drehbare Verbindungsstange kann jedoch nicht ausreichende Sicherheit gegen gefährliche Kippbewegungen des mitgeführten Kinderfahrrades während der Fahrt gewährleisten (DE 193 31 503 A1).

Manche der vorgeschlagenen Anhängevorrichtungen sind zudem nur sehr umständlich mitzuführen, solange sie nicht benötigt werden (DE 42 44 206 A1). Andere bereits bekannte Kopplungssysteme fixieren das Vorderrad des Kinderfahrrades an der Vorderradachse in ausreichendem Abstand über dem Boden (beispielsweise DE-GM 93 13 520.3, DE-GM 92 12 622.7). Eine dort beschriebene zusätzliche Arretierung des Vorderrades verhindert zwar eine ungewollte Rotation des Vorderrades während des Abschleppvorgangs, die Stabilität des mitgeführten Kinderfahrrads erhöht sich dagegen nur unwesentlich. Alle bereits bekannten Kopplungssysteme haben den gemeinsamen Nachteil, dass das Kind während des Abschleppvorgangs nicht auf dem abgeschleppten Kinderfahrrad sitzen bleiben kann.

Aufgabe der Erfindung ist es daher, eine Kopplungsvorrichtung der eingangs genannten Gattung so auszugestalten, dass das abzuschleppende Kinderfahrrad sicher und stabil mit dem schleppenden Fahrrad verbunden werden und das Kind während des Abschleppvorgangs ungefährdet auf dem Kinderfahrrad sitzen bleiben kann. Außerdem soll die Kopplungsvorrichtung sowohl während der Benutzung als auch ohne damit verbundenem Kinderfahrrad die Fahreigenschaften des schleppenden Fahrrads nicht wesentlich beeinträchtigen.

Diese Aufgabe wird erfindungsgemäß dadurch gelöst, dass die Kopplungsvorrichtung seitlich im Bereich des Hinterrades an mindestens drei Stellen fest am schleppenden Fahrrad anbringbar ist und der Vorderradumfang des um die Vorderradachse frei beweglichen Kinderfahrrads an mindestens drei Stellen fest und unbeweglich mit der Kopplungsvorrichtung verbindbar ist.

Durch Bewegung des Kindes auf dem Kinderfahrrad, insbesondere bei kurvenreichen und unebenen Strecken, treten große Drehmomente an der Kopplungsvorrichtung auf. Eine Befestigung des Vorderradumfangs an mindestens drei Stellen mit der Kopplungsvorrichtung verhindert jedoch auch unter Belastung zuverlässig ein unbeabsichtigtes Lösen des Kinderfahrrads von der Kopplungsvorrichtung. Da die Kopplungsvorrichtung ihrerseits an mindestens drei Stellen fest mit dem schleppenden Fahrrad verbunden ist, übertragen sich sämtliche Bewegungen des Kindes sowie des Kinderfahrrads auf das schleppende Fahrrad und können dort vom Fahrer ausgeglichen werden.

Vorzugsweise ist vorgesehen, dass die Kopplungsvorrichtung durch mit Schrauben befestigbare Schellen am Rahmen anbringbar ist. Sollte die Kopplungsvorrichtung nicht benötigt werden, so kann diese durch einfaches Lösen der Schrauben vom Fahrrad demontiert werden. Gleichzeitig bieten mit Schrauben befestigbare Schellen wesentlich mehr Halt und Sicherheit als alternativ verwendbare Schnapp- oder Spannvorrichtungen.

Gemäß einer bevorzugten Ausführungsform der Erfindung ist vorgesehen, dass zwei der drei Verbindungsstellen von Kopplungsvorrichtung und zu schleppendem Kinderfahrrad als eine das Vorderrad des Kinderfahrrads aufnehmende, dem Vorderradumfang angepasste oben offene Blechwanne ausgeführt sind. Das Kinderfahrrad kann durch einfaches Hineinstellen des Vorderrades in die Blechwanne abgeschleppt werden. Das Eigengewicht des Fahrrads, evtl. erhöht durch das Gewicht des darauf sitzenden Kindes, sowie eine zusätzliche Fixierung an einer anderen Stelle des Vorderradumfangs machen ein unbeabsichtigtes Lösen des Kinderfahrrads aus der Kopplungsvorrichtung unmöglich. Trotzdem kann das Kinderfahrrad innerhalb kurzer Zeit stabil und sicher mit der Kopplungsvorrichtung verbunden werden.

Einer vorteilhaften Ausgestaltung des Erfindungsgedankens zufolge ist vorgesehen, dass mit einer herausnehmbaren Einlage in die oben offene Blechwanne die Kopplungsvorrichtung an verschiedene Vorderraddurchmesser des zu schleppenden Kinderfahrrades anpassbar ist. Die Form der Blechwanne muss möglichst genau dem Durchmesser des zu schleppenden Kinderfahrrades entsprechen, damit eine zuverlässige und sichere Befestigung des zu schleppenden Kinderfahrrades mit der Kopplungsvorrichtung gewährleistet ist. Mit einer Einlage kann bei gleichbleibenden Abmessungen der Blechwanne der Durchmesser des Vorderrades des zu schleppenden Kinderrades variiert und somit an eine beispielsweise mit dem Alter des Kindes zunehmende Radgröße angepasst werden.

Gemäß einer Ausgestaltung des Erfindungsgedankens ist vorgesehen, dass die Kopplungsvorrichtung mittels eines das Hinterrad des schleppenden Fahrrads umgreifenden Bügels auf der der Kopplungsvorrichtung gegenüberliegenden Seite entweder an der Achse oder am Rahmen des schleppenden Fahrrads zusätzlich befestigbar ist. Durch eine zusätzliche Befestigung der Kopplungsvorrichtung auf der gegenüberliegenden Rahmenseite wird die Stabilität gegenüber Drehbewegungen erhöht, die vor allem bei schnellen Kurvenfahrten, unebenen Strecken sowie versuchten Lenkbewegungen des Kindes während des Abschleppvorgangs auftreten.

Vorzugsweise ist vorgesehen, dass die Kopplungsvorrichtung in Form einer Blechschale ausgeführt ist. Eine als Blechschale ausgeführte Kopplungsvorrichtung weist eine hohe Formsteifigkeit auf, was sich vor allem vorteilhaft für die Sicherheit des Kindes während des Abschleppvorgangs auswirkt.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:
Fig. 1 die Seitenansicht einer an einem schleppenden Fahrrad montierten Kopplungsvorrichtung und
Fig. 2 einen waagrechten Schnitt durch die Kopplungsvorrichtung.

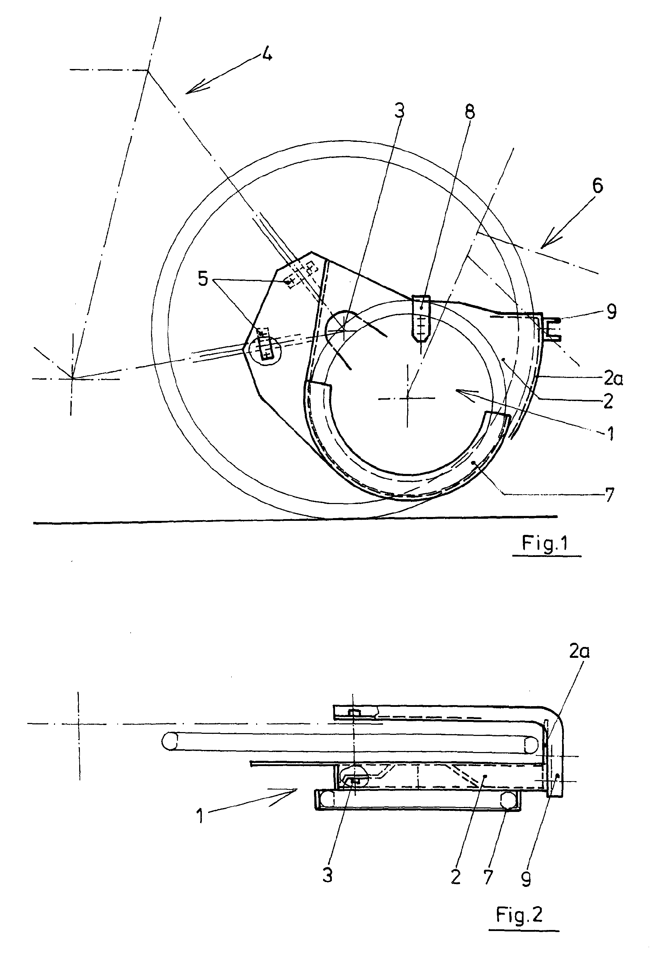

Das in den Fig. 1 und 2 gezeigte Ausführungsbeispiel zeigt eine Kopplungsvorrichtung 1, die in Form einer Blechschale 2 ausgebildet ist. Die Kopplungsvorrichtung 1 ist an der Achse 3 sowie an zwei unterschiedlichen Stellen am Rahmen des schleppenden Fahrrads 4 angebracht. Zur Befestigung am Rahmen des schleppenden Fahrrades 4 dienen zwei mit Schrauben befestigbare Schellen 5. Eine dem Vorderradumfang des Kinderfahrrads 6 angepasste oben offene Blechwanne 7 ist für die Aufnahme des Vorderrads des Kinderfahrrads 6 vorgesehen. Eine weitere Verbindung der Kopplungsvorrichtung 1 mit dem zu schleppenden Kinderfahrrad 6 ist als eine der Blechwanne 7 gegenüberliegende, den Radkranz des Vorderrades umgreifende Schnalle 8 ausgeführt. Diese Schnalle 8 kann aus einem Band aus Metall oder einem flexiblen und beständigen Material wie beispielsweise Leder oder Plastik sowie einem Verschluss bestehen. Die Blechschale 2 ist mit einem das Hinterrad des schleppenden Fahrrads 4 umgreifenden Bügel 9 zusätzlich auf der der Kopplungsvorrichtung 1 gegenüberliegenden Seite an der Achse 3 des schleppenden Fahrrads 4 befestigt. Eine Schutzabdeckung 2a ist an der Blechschale 2 vom umgreifenden Bügel 9 aus abwärts hinter dem Hinterrad des schleppenden Fahrrades befestigt. Damit wird die Sicherheit für das Kind auf dem geschleppten Fahrrad erhöht, da die Füße des Kindes nicht unbeabsichtigt an das sich drehende Hinterrad des schleppenden Fahrrades oder in dessen Speichen gelangen können. Die Schutzabdeckung 2a wirkt zusätzlich wie eine Verlängerung des Schutzbleches und verhindert, dass Schmutz und Nässe auf das sich direkt hinter dem Hinterrad des schleppenden Fahrrades befindende Kind übertragen werden.

Das Kinderfahrrad ist um dessen Vorderradachse 10 frei beweglich und kann während des Abschleppvorgangs ohne zusätzliche Krafteinwirkung auf die Kopplungsvorrichtung 1 Bodenunebenheiten ausgleichen.

Es ist auch möglich, dass die Blechschale 2 eine oder mehrere Aussparungen aufweist, so dass ohne eine funktionale Beeinträchtigung der Kopplungsvorrichtung 1 deren Gewicht deutlich reduziert werden kann. Statt einer Ausführung als Blechschale 2 können wesentliche Teile der Kopplungsvorrichtung 1 auch in Form von stabilen Rohrgestängen ausgeführt sein.

## Patentansprüche

1. Kopplungsvorrichtung (1) für Fahrräder zum Verbinden eines schleppenden Fahrrads (4) mit einem geschleppten Kinderfahrrad (6), die an mindestens zwei Stellen am Rahmen des schleppenden Fahrrads fest anbringbar ist und mit der das Vorderrad des zu schleppenden Kinderfahrrads (6) vom Boden abgehoben unbeweglich verbindbar ist, **dadurch gekennzeichnet, dass** die Kopplungsvorrichtung (1) seitlich im Bereich des Hinterrads an mindestens drei Stellen fest am schleppenden Fahrrad (4) anbringbar ist und der Vorderradumfang des um die Vorderradachse (10) frei beweglichen Kinderfahrrads (6) an mindestens drei Stellen fest und unbeweglich mit der Kopplungsvorrichtung (1) verbindbar ist.

2. Kopplungsvorrichtung (1) nach Anspruch 1, **dadurch gekennzeichnet, dass** die Kopplungsvorrichtung (1) an der Achse (3) sowie an zwei Stellen am Rahmen des schleppenden Fahrrads (4) fest anbringbar ist.

3. Kopplungsvorrichtung (1) nach Anspruch 1 oder 2, **dadurch gekennzeichnet, dass** die Kopplungsvorrichtung (1) durch mit Schrauben befestigbare Schellen (5) am Rahmen anbringbar ist.

4. Kopplungsvorrichtung (1) nach Anspruch 1, **dadurch gekennzeichnet, dass** zwei der drei Verbindungsstellen von Kopplungsvorrichtung (1) und zu schleppendem Kinderfahrrad (6) als eine das Vorderrad des Kinderfahrrads (6) aufnehmende, dem Vorderradumfang angepasste, oben offene Blechwanne (7) ausgeführt sind.

5. Kopplungsvorrichtung (1) nach Anspruch 4, **dadurch gekennzeichnet, dass** mit einer herausnehmbaren Einlage in die oben offene Blechwanne (7) die Kopplungsvorrichtung (1) an verschiedene Vorderraddurchmesser des zu schleppenden Kinderfahrrades (6) anpassbar ist.

6. Kopplungsvorrichtung (1) nach Anspruch 1 oder 4, **dadurch gekennzeichnet, dass** eine Verbindung der Kopplungsvorrichtung (1) mit dem zu schleppenden Kinderfahrrad (6) als eine den Radkranz des Vorderrades umgreifende Schnalle (8) ausgeführt ist.

7. Kopplungsvorrichtung (1) nach Anspruch 1, **dadurch gekennzeichnet, dass** die Kopplungsvorrichtung (1) mittels eines das Hinterrad des schleppenden Fahrrads (4) umgreifenden Bügels (9) auf der der Kopplungsvorrichtung (1) gegenüberliegenden Seite an der Achse (3) des schleppenden Fahrrads (4) zusätzlich befestigbar ist.

8. Kopplungsvorrichtung (1) nach Anspruch 1, **dadurch gekennzeichnet, dass** die Kopplungsvorrichtung (1) mittels eines das Hinterrad des schleppenden Fahrrads (4) umgreifenden Bügels (9) auf der der Kopplungsvorrichtung (1) gegenüberliegenden Seite am Rahmen des schleppenden Fahrrads (4) zusätzlich befestigbar ist.

9. Kopplungsvorrichtung (1) nach Anspruch 1, **dadurch gekennzeichnet, dass** die Kopplungsvorrichtung (1) in Form einer Blechschale (2) ausgeführt ist.
